# EUROPEAN PATENT APPLICATION

(11) **EP 4 465 483 A1**
(43) Date of publication of application: **20.11.2024**
(21) Application number: 23739975.3
(22) Date of filing: 09.01.2023
(51) Int. Cl.: H02J 50/10

(54) **CHARGING APPARATUS, CHARGING METHOD, CHIP, COMPUTER PROGRAM PRODUCT, AND ELECTRONIC DEVICE**

(30) Priority: 12.01.2022 CN 202210035214
(71) Applicant: VIVO MOBILE COMMUNICATION CO., LTD., Dongguan, Guangdong 523863 (CN)
(72) Inventor: SONG, Feiyang, Dongguan, Guangdong 523863 (CN)
(74) Representative: Conti, Marco
(86) International application number: PCT/CN2023/071373
(87) International publication number: WO 2023/134633

(57) **Abstract**

A charging device, a charging method, a chip, a computer program product, and an electronic device are provided. The charging device includes a charging base and a wireless power bank. The charging base is provided with a first controller, a first power management chip, and a first interface. The first controller is electrically connected to the first power management chip and the first interface separately, and the first interface is electrically connected to the first power management chip. The wireless power bank is provided with a second controller, a switch module, a second interface, and a wireless charging coil. The second controller is electrically connected to the second interface and the switch module separately, the switch module is electrically connected to the second interface and the wireless charging coil separately, the second interface is adapted to the first interface, and the second interface is detachably connected to the first interface. The charging device is in a first charging mode in a case that the charging base is electrically connected to and matches the wireless power bank and a first temperature of the wireless power bank is greater than or equal to a first preset temperature.

## Description

### CROSS-REFERENCE TO RELATED APPLICATIONS

This application claims priority to Chinese Patent Application No. 202210035214.7, filed with the China National Intellectual Property Administration on January 12, 2022 and entitled "CHARGING DEVICE AND CHARGING METHOD", which is incorporated herein by reference in its entirety.

### TECHNICAL FIELD

The present disclosure relates to the field of communication technologies, and specifically, to a charging device, a charging method, a chip, a computer program product, and an electronic device.

### BACKGROUND

With the rapid development of wireless charging technology, electronic devices supporting the wireless charging technology are increasing. A wireless power bank that is convenient to carry and capable of wirelessly charging an electronic device has emerged.

In a conventional technology, to facilitate portability, a size and a weight of the wireless power bank are designed to be small, and it is difficult to add a heat dissipating device such as a fan inside the wireless power bank, causing obvious heat generation of the wireless power bank when charging the electronic device. Especially in a scenario in which the wireless power bank wirelessly charges the electronic device while charging itself, heat generated by self-charging is superimposed with heat generated by wirelessly charging the electronic device, making the heating generation more severe, and severely affecting charging efficiency.

### SUMMARY

The present disclosure aims to provide a charging device, a charging method, a chip, a computer program product, and an electronic device, to resolve the problem that an existing wireless power bank has low charging efficiency.

To resolve the foregoing technical problem, the present disclosure is implemented as follows:

According to a first aspect, the present disclosure discloses a charging device, where the charging device includes a charging base and a wireless power bank, where
the charging base is provided with a first controller, a first power management chip, and a first interface, the first controller is electrically connected to the first power management chip and the first interface separately, and the first interface is electrically connected to the first power management chip;
the wireless power bank is provided with a second controller, a switch module, a second interface, and a wireless charging coil, the second controller is electrically connected to the second interface and the switch module separately, the switch module is electrically connected to the second interface and the wireless charging coil separately, the second interface is adapted to the first interface, and the second interface is detachably connected to the first interface; and
the charging device is in a first charging mode in a case that the charging base is electrically connected to and matches the wireless power bank and a first temperature of the wireless power bank is greater than or equal to a first preset temperature, where in the first charging mode, the second controller controls the switch module to conduct the wireless charging coil and the second interface, and the first power management chip controls the wireless charging coil to wirelessly charge an electronic device.

Optionally, the wireless power bank further includes a second power management chip, a third power management chip, and a battery cell, where
the second controller is electrically connected to the second power management chip and the third power management chip separately, the second power management chip is connected to the switch module, the battery cell is electrically connected to the second power management chip and the third power management chip separately, and the third power management chip is electrically connected to the wireless charging coil; and
the charging device is in a second charging mode in a case that the charging base does not match the wireless power bank, where in the second charging mode, the second controller controls the switch module to conduct the second power management chip and the second interface, and controls the second power management chip and the third power management chip to operate, to control the charging base through the second power management chip to charge the battery cell and control the wireless charging coil through the third power management chip to wirelessly charge the electronic device.

Optionally, the second controller is configured to obtain the first temperature of the wireless power bank and a second temperature of the electronic device in a case that the charging base matches the wireless power bank and the first temperature of the wireless power bank is less than the first preset temperature, and the charging device switches between the first charging mode and the second charging mode based on the first temperature and the second temperature.

Optionally, the charging device is in the first charging mode in a case that the first temperature is greater than the second temperature and a difference between the first temperature and the second temperature is greater than a first threshold; and
the charging device is in the second charging mode in a case that the second temperature is greater than the first temperature and a difference between the second temperature and the first temperature is greater than the first threshold.

Optionally, the charging base is further provided with a fourth power management chip, and the fourth power management chip is electrically connected to the first controller and the first interface separately, where
the second controller is configured to obtain a battery level of the electronic device in a case that the charging base matches the wireless power bank, and the charging device is in a third charging mode in a case that the battery level of the electronic device is greater than or equal to a second threshold, where in the third charging mode, the second controller controls the switch module to conduct the second interface and the battery cell, and controls the third power management chip to operate, to control the wireless charging coil through the third power management chip to wirelessly charge the electronic device; and the first controller controls the fourth power management chip to operate, to control the charging base through the fourth power management chip to charge the battery cell.

Optionally, the second controller is configured to obtain the first temperature of the wireless power bank and a second temperature of the electronic device in a case that the charging base matches the wireless power bank and the first temperature of the wireless power bank is less than the first preset temperature, and the charging device switches between the first charging mode and the third charging mode.

Optionally, the charging device is in the first charging mode in a case that the first temperature is greater than the second temperature and a difference between the first temperature and the second temperature is greater than a first threshold; and the charging device is in the third charging mode in a case that the second temperature is greater than the first temperature and a difference between the second temperature and the first temperature is greater than the first threshold.

According to a second aspect, the present disclosure further discloses a charging method, where the charging method is used in the charging device according to any one of the foregoing, and the charging method includes:
obtaining, in a case that the second interface of the wireless power bank is electrically connected to the first interface of the charging base, a matching status between the charging base and the wireless power bank and a first temperature of the wireless power bank; and
performing a first charging mode in a case that the charging base matches the wireless power bank and the first temperature of the wireless power bank is greater than or equal to a first preset temperature, where in the first charging mode, the second controller of the wireless power bank controls the switch module to conduct the wireless charging coil and the second interface, and the first controller of the charging base controls the first power management chip to operate, to control the wireless charging coil through the first power management chip to wirelessly charge the electronic device.

Optionally, the charging method further includes:
performing a second charging mode in a case that the charging base does not match the wireless power bank, where in the second charging mode, the second controller controls the switch module to conduct the second power management chip and the second interface, and controls the second power management chip and the third power management chip to operate, to control the charging base through the second power management chip to charge the battery cell and control the wireless charging coil through the third power management chip to wirelessly charge the electronic device.

Optionally, the charging method further includes:
performing the first charging mode or the second charging mode based on the first temperature and a second temperature of the electronic device in a case that the charging base matches the wireless power bank and the first temperature of the wireless power bank is less than the first preset temperature.

Optionally,
the second controller is configured to obtain a battery level of the electronic device in a case that the charging base matches the wireless power bank, and the charging device is in a third charging mode in a case that the battery level of the electronic device is greater than or equal to a second threshold, where in the third charging mode, the second controller controls the switch module to conduct the second interface and the battery cell, and controls the third power management chip to operate, to control the wireless charging coil through the third power management chip to wirelessly charge the electronic device; and the first controller controls the fourth power management chip to operate, to control the charging base through the fourth power management chip to charge the battery cell.

Optionally, the charging method further includes:
performing the first charging mode or the third charging mode based on the first temperature and a second temperature of the electronic device in a case that the charging base matches the wireless power bank and the first temperature of the wireless power bank is less than the first preset temperature.

Optionally,
the charging device is in the first charging mode in a case that the first temperature is greater than the second temperature and a difference between the first temperature and the second temperature is greater than a first threshold; and the charging device is in the third charging mode in a case that the second temperature is greater than the first temperature and a difference between the second temperature and the first temperature is greater than the first threshold.

According to a third aspect, the present disclosure further discloses a chip, where the chip includes a processor and a communication interface, the communication interface is coupled to the processor, and the processor is configured to execute a program or instructions to implement the method according to any one of the foregoing.

According to a fourth aspect, the present disclosure further discloses a computer program product, where the program product is executed by at least one processor to implement the method according to any one of the foregoing.

According to a fifth aspect, the present disclosure further discloses an electronic device, where the electronic device is configured to perform the charging method according to any one of the foregoing.

In embodiments of the present disclosure, the charging base is provided with the first power management chip, and the wireless power bank is provided with the switch module. The charging device may be in the first charging mode in a case that the wireless power bank is connected to the charging base, that is, in a scenario in which the wireless power bank wirelessly charges the electronic device while charging itself, and in a case that the charging base is electrically connected to and matches the wireless power bank and the first temperature of the wireless power bank is greater than or equal to the first preset temperature. In other words, the second controller on the wireless power bank controls the switch module to conduct the wireless charging coil and the second interface, and the first power management chip on the charging base controls the wireless charging coil to wirelessly charge the electronic device, to reduce the heat generation of the wireless power bank and improve charging efficiency of the wireless power bank when wirelessly charging the electronic device.

Additional aspects and advantages of the present invention are given in the following description, and some are obvious from the following description or learned from practices of the present invention.

### BRIEF DESCRIPTION OF THE DRAWINGS

To describe the technical solutions in embodiments of the present disclosure or in a conventional technology more clearly, the following briefly describes the accompanying drawings required for describing the embodiments or a conventional technology. It is clear that, the accompanying drawings in the following descriptions show some embodiments of the present disclosure, and a person of ordinary skill in the art may still derive other drawings from these accompanying drawings without creative efforts.
FIG. 1 is a schematic structural diagram of a charging device according to an embodiment of the present disclosure;
FIG. 2 is a schematic structural diagram of another charging device according to an embodiment of the present disclosure;
FIG. 3 is a step flowchart of a charging method according to an embodiment of the present disclosure; and
FIG. 4 is a schematic diagram of modules of a charging device according to an embodiment of the present disclosure.

Reference numerals: 100-charging base, 101-first controller, 102-first power management chip, 103-first interface, 104-fourth power management chip, 200-wireless power bank, 201-second controller, 202-switch module, 203-second interface, 204-wireless charging coil, 205-second power management chip, 206-third power management chip, 207-cell, 300-electronic device.

### DETAILED DESCRIPTION

To make objectives, technical solutions, and advantages of embodiments of the present disclosure clearer, the following clearly and completely describes the technical solutions in the embodiments of the present disclosure with reference to the accompanying drawings in the embodiments of the present disclosure. It is clear that the described embodiments are some but not all of embodiments of the present disclosure. All other embodiments obtained by a person of ordinary skill in the art based on the embodiments of the present disclosure without making creative efforts shall fall within the protection scope of the present disclosure.

Features of the terms "first" and "second" in the description and claims of the present disclosure may explicitly or implicitly include one or more of that feature. In the description of the present disclosure, unless otherwise stated, "a plurality of" means two or more than two. Furthermore, in the specification and claims, "and/or" means at least one of the conjoined objects, and the character "/" generally means that the contextual object is an "or" relationship.

In the description of the present disclosure, it should be understood that orientation or position relationships indicated by the terms such as "center", "longitudinal", "transverse", "length", "width", "thickness", "on", "below", "front", "back", "left", "right", "vertical", "horizontal", "top", "bottom", "inside", "outside", "clockwise", "anticlockwise", "axial direction", "radial direction", and "circumferential direction" are based on orientation or position relationships shown in the accompanying drawings, and are used only for ease and brevity of illustration and description, rather than indicating or implying that the mentioned device or component needs to have a particular orientation or needs to be constructed and operated in a particular orientation. Therefore, such terms should not be construed as limiting of the present disclosure.

In descriptions of the present disclosure, it should be noted that unless otherwise expressly specified and limited, terms "mount", "interconnect", and "connect" should be understood in a broad sense. For example, the terms may indicate a fixed connection, a detachable connection, or an integral connection; may be a mechanical connection or an electrical connection; or may be direct interconnection, indirect interconnection through an intermediate medium, or communication between the interior of two elements. The specific meanings of the above terms in the present disclosure may be understood by a person of ordinary skill in the art in the specific context.

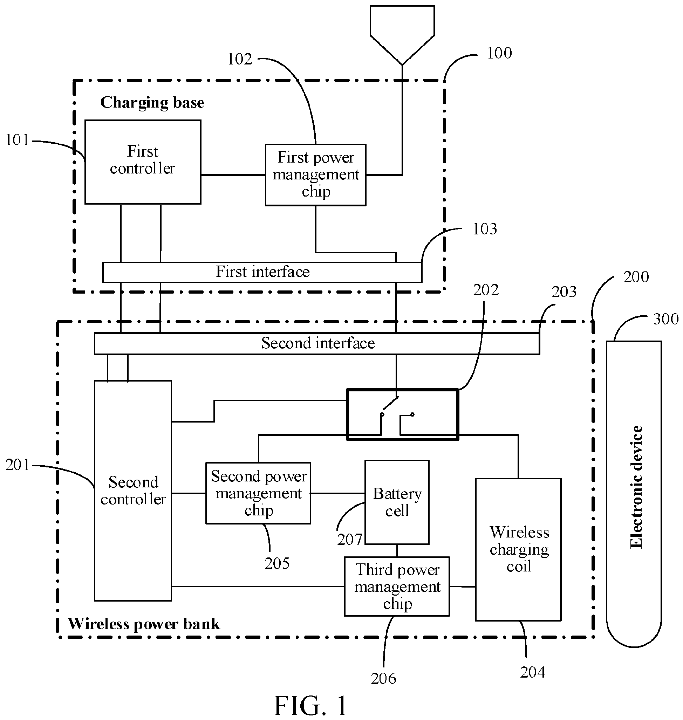

FIG. 1 is a schematic structural diagram of a charging device according to an embodiment of the present disclosure. As shown in FIG. 1, the charging device includes a charging base 100 and a wireless power bank 200.

The charging base 100 is provided with a first controller 101, a first power management chip 102, and a first interface 103, the first controller 101 is electrically connected to the first power management chip 102 and the first interface 103 separately, and the first interface 103 is electrically connected to the first power management chip 102.

The wireless power bank 200 is provided with a second controller 201, a switch module 202, a second interface 203, and a wireless charging coil 204, the second controller 201 is electrically connected to the second interface 203 and the switch module 202 separately, the switch module 202 is electrically connected to the second interface 203 and the wireless charging coil 204 separately, the second interface 203 is adapted to the first interface 103, and the second interface 203 is detachably connected to the first interface 103.

The charging device is in a first charging mode in a case that the charging base 100 is electrically connected to and matches the wireless power bank 200 and a first temperature of the wireless power bank 200 is greater than or equal to a first preset temperature, where in the first charging mode, the second controller 201 controls the switch module 202 to conduct the wireless charging coil 204 and the second interface 203, and the first power management chip 102 controls the wireless charging coil 204 to wirelessly charge an electronic device 300.

In the embodiments of the present disclosure, the charging base 100 is provided with the first power management chip 102, and the wireless power bank 200 is provided with the switch module 202. The charging device may be in the first charging mode in a case that the wireless power bank 200 is connected to the charging base 100, that is, in a scenario in which the wireless power bank 200 wirelessly charges the electronic device 300 while charging itself, and in a case that the charging base 100 is electrically connected to and matches the wireless power bank 200 and the first temperature of the wireless power bank 200 is greater than or equal to the first preset temperature. In other words, the second controller 201 on the wireless power bank 200 controls the switch module 202 to conduct the wireless charging coil 204 and the second interface 203, and the first power management chip 102 on the charging base 100 controls the wireless charging coil 204 to wirelessly charge the electronic device 300, to reduce the heat generation of the wireless power bank 200 and improve charging efficiency of the wireless power bank 200 when wirelessly charging the electronic device 300.

In the embodiments of the present disclosure, the charging base 100 may be configured to charge the wireless power bank 200. The charging base 100 may be provided with the first interface 103, and the first interface 103 may be electrically connected to the second interface 203 on the wireless power bank 200. In actual application, in a case that the second interface 203 of the wireless power bank 200 is connected to the first interface 103 on the charging base 100, an electrical connection between the wireless power bank 200 and the charging base 100 can be implemented.

Specifically, because the first controller 101 on the charging base 100 is electrically connected to the first power management chip 102 and the first interface 103 separately, the first controller 101 may separately control the first power management chip 102 and the first interface 103 to operate. Because the second controller 201 on the wireless power bank 200 is electrically connected to the switch module 202 and the second interface 203 separately, the second controller 201 may separately control the switch module 202 and the second interface 203 to operate.

In the embodiments of the present disclosure, the charging device may include a plurality of charging modes. The charging device may operate in different charging modes based on information such as a matching status between the charging base 100 and the wireless power bank 200, a temperature of the wireless power bank 200, a temperature of the electronic device 300, and a battery level of the electronic device 300.

In actual application, when the second interface 203 of the wireless power bank 200 is electrically connected to the first interface 103 of the charging base 100, the wireless power bank 200 automatically recognizes whether the charging base 100 matches the wireless power bank 200, and obtains the first temperature of the wireless power bank 200, a second temperature of the electronic device 300, and the battery level of the electronic device 300.

Specifically, whether the charging base 100 matches the wireless power bank 200 may be determined on whether charging protocols of the charging base 100 and the wireless power bank 200 are consistent, which means that in a case that it is recognized that the charging protocol of the charging base 100 is consistent with the charging protocol of the wireless power bank 200, it may be considered that the charging base 100 matches the wireless power bank 200; and in a case that it is recognized that the charging protocol of the charging base 100 is inconsistent with the charging protocol of the wireless power bank 200, it may be considered that the charging base 100 does not match the wireless power bank 200. In actual application, the charging base 100 may implement charging management of the wireless power bank 200 in a case that the charging base 100 matches the wireless power bank 200. The charging base 100 cannot implement the charging management of the wireless power bank 200 in a case that the charging base 100 does not match the wireless power bank 200.

Specifically, the first preset temperature may be specifically a critical temperature at which the wireless power bank 200 affects the charging efficiency, and in a case that the first temperature of the wireless power bank 200 is greater than or equal to the first preset temperature, it may be considered that the heat generation of the wireless power bank 200 is severe and the temperature thereof is relatively high, affecting the charging efficiency of the wireless power bank 200 for the electronic device 300 and the charging efficiency of the charging base 100 for the wireless power bank 200. In a case that the first temperature of the wireless power bank 200 is less than the first preset temperature, it may be considered that the temperature of the wireless power bank 200 is normal, and the temperature has little impact on the charging efficiency of the wireless power bank 200 for the electronic device 300.

For example, the first preset temperature may be set based on an actual situation. For example, the first preset temperature may be 45 degrees Celsius, 48 degrees Celsius, 53 degrees Celsius, or the like. The first preset temperature is not specifically limited in the embodiments of the present disclosure.

In the embodiments of the present disclosure, in a case that the charging base 100 is electrically connected to and matches the wireless power bank 200 and the first temperature of the wireless power bank 200 is greater than or equal to the first preset temperature, it may be considered that the heat generation of the wireless power bank 200 is severe and the temperature is high. In this case, the charging device may operate in the first charging mode, which means that the second controller 201 on the wireless power bank 200 controls the switch module 202 to conduct the wireless charging coil 204 and the second interface 203, and the first power management chip 102 on the charging base 100 controls the wireless charging coil 204 to wirelessly charge the electronic device 300, to reduce the heat generation of the wireless power bank 200 and improve the charging efficiency of the wireless power bank 200 when wirelessly charging the electronic device 300.

In the embodiments of the present disclosure, the wireless power bank 200 may further include a second power management chip 205, a third power management chip 206, and a battery cell 207. The second controller 201 is electrically connected to the second power management chip 205 and the third power management chip 206 separately, the second power management chip 205 is connected to the switch module 202, the battery cell 207 is electrically connected to the second power management chip 205 and the third power management chip 206 separately, and the third power management chip 206 is electrically connected to the wireless charging coil 204.

In actual application, the battery cell 207 may be used as a power storage module of the wireless power bank 200. Because the second power management chip 205 is connected between the second controller 201 and the battery cell 207, under control of the second controller 201, the second power management chip 205 may be configured to perform charging management of wired charging on the battery cell 207. Because the third power management chip 206 is connected among the second controller 201, the battery cell 207, and the wireless charging coil 204, the third power management chip 206 may be configured to perform charging management of wireless charging of the wireless charging coil 204 on the electronic device 300. In actual application, whether the second power management chip performs the charging management of wired charging or the third power management chip 206 performs the charging management of wireless charging, some heat is generated to increase the temperature of the wireless power bank 200.

In the embodiments of the present disclosure, the charging device is in a second charging mode in a case that the charging base 100 does not match the wireless power bank 200. In the second charging mode, the second controller 201 controls the switch module 202 to conduct the second power management chip 205 and the second interface 203, and controls the second power management chip 205 and the third power management chip 206 to operate, to control the charging base 100 through the second power management chip 205 to charge the battery cell 207, and control the wireless charging coil 204 through the third power management chip 206 to wirelessly charge the electronic device 300.

In actual application, in a case that the charging base 100 does not match the wireless power bank 200, the charging base 100 cannot implement the charging management for the wireless power bank 200. In this case, the charging device may operate in the second charging mode, which means that the second controller 201 controls the switch module 202 to conduct the second power management chip 205 and the second interface 203, and controls the second power management chip 205 and the third power management chip 206 to operate, to control the charging base 100 through the second power management chip 205 to charge the battery cell 207, and control the wireless charging coil 204 through the third power management chip 206 to wirelessly charge the electronic device 300, thereby overcoming the defect that the charging base 100 cannot implement the charging management for the wireless power bank 200.

In some embodiments of the present disclosure, the second controller 201 may be configured to obtain the first temperature of the wireless power bank 200 and the second temperature of the electronic device 300 in a case that the charging base 100 matches the wireless power bank 200 and the first temperature of the wireless power bank 200 is less than the first preset temperature, and the charging device may switch between the first charging mode and the second charging mode based on the first temperature and the second temperature.

In actual application, in a case that the charging base 100 matches the wireless power bank 200 and the first temperature of the wireless power bank 200 is less than the first preset temperature, it may be considered that the charging base 100 may implement the charging management of the wireless power bank 200, the temperature of the wireless power bank 200 is normal, and the temperature has little impact on the charging efficiency of the wireless power bank 200 for the electronic device 300. In this case, the second controller 201 may obtain the first temperature and the second temperature of the wireless power bank 200 in real time, and switches between the first charging mode and the second charging mode based on the first temperature and the second temperature, which means that the second controller 201 controls the switch module 202 to switch between conducting the wireless charging coil 204 and the second interface 203 and conducting the second power management chip 205 and the second interface 203. In this way, switching between the wired charging and wireless charging controlled by the wireless power bank 200 and the wireless charging controlled by the charging base 100 may be implemented, to improve the overall charging efficiency of the charging device.

Optionally, the charging device is in the first charging mode in a case that the first temperature is greater than the second temperature and a difference between the first temperature and the second temperature is greater than a first threshold; and the charging device is in the second charging mode in a case that the second temperature is greater than the first temperature and a difference between the second temperature and the first temperature is greater than the first threshold.

In actual application, in a case that the first temperature is greater than the second temperature, and the difference between the first temperature and the second temperature is greater than the first threshold, it may be considered that the heat generation of the wireless power bank 200 is more severe than the heat generation of the electronic device 300. In this case, the charging device may operate in the first charging mode, which means that the charging base 100 is used to control the wireless charging coil 204 to wirelessly charge the electronic device 300. In this way, the charging efficiency is high, and the temperature of the wireless power bank 200 may be reduced. In a case that the second temperature is greater than the first temperature and the difference between the second temperature and the first temperature is greater than the first threshold, it may be considered that the heat generation of the electronic device 300 is more severe than the heat generation of the wireless power bank 200. In this case, the charging device may operate in the second charging mode, which means that the wireless power bank 200 is used to control the charging base 100 to perform the wired charging on the wireless power bank 200, and control the wireless charging coil 204 to wirelessly charge the electronic device 300. In this way, the charging efficiency is high, and the temperature of the electronic device 300 may be reduced. In the embodiments of the present disclosure, by charging in the first charging mode and the second charging mode alternately, the wireless power bank 200 may wirelessly charge the electronic device 300 with high charging efficiency, and the charging base 100 may perform the wired charging on the wireless power bank 200 with high charging efficiency.

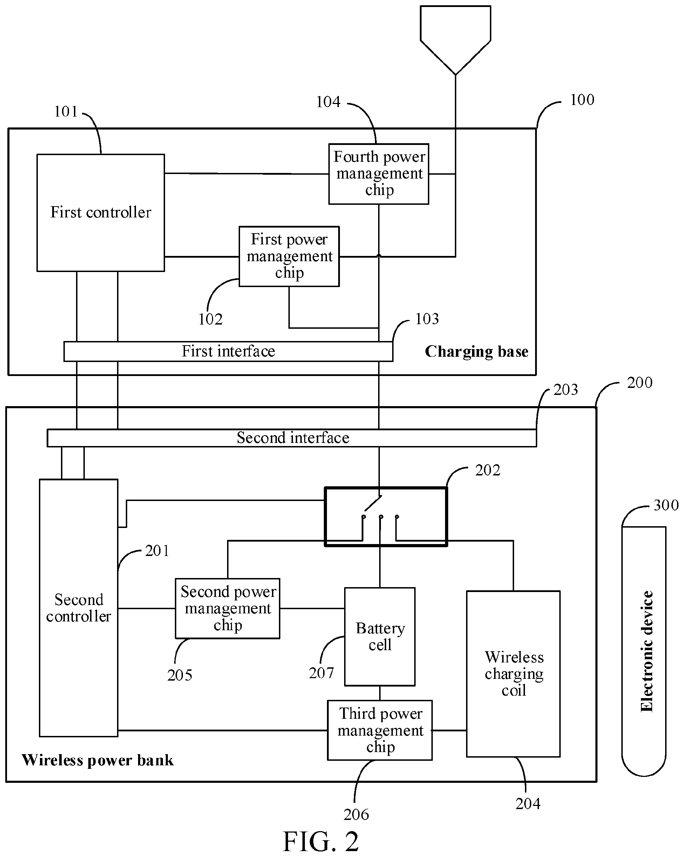

FIG. 2 is a schematic structural diagram of another charging device according to an embodiment of the present disclosure. As shown in FIG. 2, based on the charging device shown in FIG. 1, the charging base 100 of the charging device shown in FIG. 2 is further provided with a fourth power management chip 104, and the fourth power management chip 104 is electrically connected to the first controller 101 and the first interface 103 separately. The second controller 201 may be configured to obtain the battery level of the electronic device 300 in a case that the charging base 100 matches the wireless power bank 200. The charging device is in a third charging mode in a case that the battery level of the electronic device 300 is greater than or equal to a second threshold. In the third charging mode, the second controller 201 controls the switch module 202 to conduct the second interface 203 and the battery cell 207, and controls the third power management chip 206 to operate, to control the wireless charging coil 204 through the third power management chip 206 to wirelessly charge the electronic device 300. The first controller 101 controls the fourth power management chip 104 to operate, to control the charging base 100 through the fourth power management chip 104 to charge the battery cell 207.

In the embodiments of the present disclosure, the second controller 201 may further obtain the battery level of the electronic device 300 in a case that the charging base 100 matches the wireless power bank 200. In a case that the battery level of the electronic device 300 is greater than or equal to the second threshold, it may be considered that the battery level of the electronic device 300 is sufficient. In a case that the battery level of the electronic device 300 is less than the second threshold, it may be considered that the battery level of the electronic device 300 is low. Specifically, the charging device may operate in the third charging mode in a case that the battery level of the electronic device 300 is greater than or equal to the second threshold, which means that the fourth power management chip 104 on the charging base 100 is used to control the charging base to perform the wired charging on the wireless power bank 200, and the third power management chip 206 on the wireless power bank 200 is used to control the wireless charging coil 204 to wirelessly charge the electronic device 300. In this way, simultaneous charging of the wireless power bank 200 and the electronic device is implemented.

In actual application, the charging device may operate in the first charging mode in a case that the charging base 100 matches the wireless power bank 200 and the battery level of the electronic device 300 is less than the second threshold. In other words, the first power management chip 102 on the charging base 100 is used to control the wireless charging coil 204 on the wireless power bank 200 to wirelessly charge the electronic device 300, to rapidly increase the battery level of the electronic device 300.

In an optional embodiment of the present disclosure, the second controller 201 may be configured to obtain the first temperature of the wireless power bank 200 and the second temperature of the electronic device 300 in a case that the charging base 100 matches the wireless power bank 200 and the first temperature of the wireless power bank 200 is less than the first preset temperature, and the charging device switches between the first charging mode and the third charging mode.

In actual application, in a case that the charging base 100 matches the wireless power bank 200 and the first temperature of the wireless power bank 200 is less than the first preset temperature, it may be considered that the charging base 100 may implement the charging management of the wireless power bank 200, the temperature of the wireless power bank 200 is normal, and the temperature has little impact on the charging efficiency of the wireless power bank 200 for the electronic device 300. In this case, the second controller 201 may obtain the first temperature and the second temperature of the wireless power bank 200 in real time, and switches between the first charging mode and the second charging mode based on the first temperature and the second temperature. In other words, the second controller 201 controls the switch module 202 to switch between conducting the wireless charging coil 204 and the second interface 203 and conducting the battery cell 207 and the second interface 203. In this way, switching between the wired charging and wireless charging controlled by the wireless power bank 200 and the wireless charging controlled by the charging base 100 may be implemented.

In some optional embodiments of the present disclosure, in a case that the first temperature is greater than the second temperature and the difference between the first temperature and the second temperature is greater than the first threshold, it may be considered that the heat generation of the wireless power bank 200 is more severe than the heat generation of the electronic device 300. In this case, the charging device may operate in the first charging mode. In other words, the charging base 100 is used to control the wireless charging coil 204 to wirelessly charge the electronic device 300. In this way, the charging efficiency is high, and the temperature of the wireless power bank 200 may be reduced. In a case that the second temperature is greater than the first temperature and the difference between the second temperature and the first temperature is greater than the first threshold, it may be considered that the heat generation of the electronic device 300 is more severe than the heat generation of the wireless power bank 200. In this case, the charging device may operate in the third charging mode, which means that the charging base 100 is controlled to perform the wired charging on the wireless power bank 200, and the wireless power bank 200 is controlled to wirelessly charge the electronic device 300. In this way, the charging efficiency is high, and the temperature of the electronic device 300 may be reduced. In the embodiments of the present disclosure, in the first charging mode and the second charging mode alternately, the wireless power bank 200 may wirelessly charge the electronic device 300 with high charging efficiency, and the charging base 100 may perform wired charging on the wireless power bank 200 with high charging efficiency.

In the charging device according to the embodiments of the present disclosure, switching between the plurality of charging modes may be implemented by arranging the switch module 202 in the wireless power bank 200. Therefore, switching between different charging modes may be implemented based on different use scenarios, so that the charging efficiency of the charging device is high.

In conclusion, the charging device according to the embodiments of the present disclosure may include at least the following advantages:

In the embodiments of the present disclosure, the charging base is provided with the first power management chip, and the wireless power bank is provided with the switch module. The charging device may be in the first charging mode in a case that the wireless power bank is connected to the charging base, that is, in a scenario in which the wireless power bank wirelessly charges the electronic device while charging itself, and in a case that the charging base is electrically connected to and matches the wireless power bank and the first temperature of the wireless power bank is greater than or equal to the first preset temperature. In other words, the second controller on the wireless power bank controls the switch module to conduct the wireless charging coil and the second interface, and the first power management chip on the charging base controls the wireless charging coil to wirelessly charge the electronic device, to reduce the heat generation of the wireless power bank and improve the charging efficiency of the wireless power bank when wirelessly charging the electronic device.

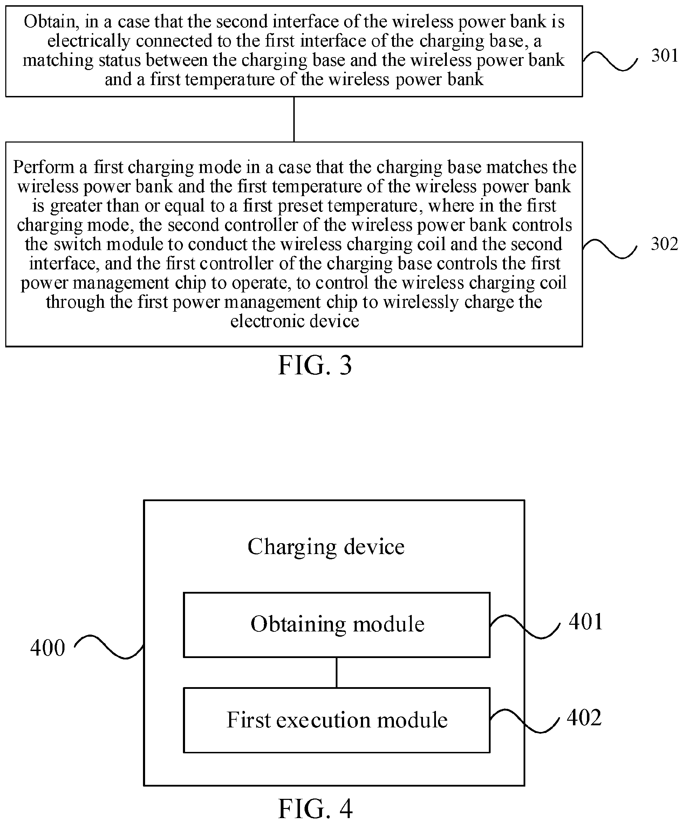

FIG. 3 is a step flowchart of a charging method according to an embodiment of the present disclosure. The charging method may be specifically used in the charging device. Specifically, the charging method may specifically include the following steps:

Step 301: Obtain, in a case that the second interface of the wireless power bank is electrically connected to the first interface of the charging base, a matching status between the charging base and the wireless power bank and a first temperature of the wireless power bank.

In the embodiments of the present disclosure, the charging base may be configured to charge the wireless power bank. The charging base is provided with the first interface, where the first interface may be configured to electrically connected to the second interface on the wireless power bank. In actual application, in a case that the second interface of the wireless power bank is connected to the first interface on the charging base, an electrical connection between the wireless power bank and the charging base may be implemented.

Specifically, because the first controller on the charging base is electrically connected to the first power management chip and the first interface separately, the first controller may separately control the first power management chip and the first interface to operate. Because the second controller on the wireless power bank is electrically connected to the switch module and the second interface separately, the second controller may separately control the switch module and the second interface to operate.

In the embodiments of the present disclosure, the charging device may include a plurality of charging modes. The charging device may operate in different charging modes based on information such as the matching status between the charging base and the wireless power bank, the temperature of the wireless power bank, the temperature of the electronic device, and the battery level of the electronic device.

In actual application, the wireless power bank automatically recognizes whether the charging base matches the wireless power bank, the first temperature of the wireless power bank, the second temperature of the electronic device, and the battery level of the electronic device in a case that the second interface of the wireless power bank is electrically connected to the first interface of the charging base.

Step 302: Perform a first charging mode in a case that the charging base matches the wireless power bank and the first temperature of the wireless power bank is greater than or equal to the first preset temperature, where in the first charging mode, the second controller of the wireless power bank controls the switch module to conduct the wireless charging coil and the second interface, and the first controller of the charging base controls the first power management chip to operate, to control the wireless charging coil through the first power management chip to wirelessly charge the electronic device.

Specifically, whether the charging base 100 matches the wireless power bank 200 may be determined on whether charging protocols of the charging base 100 and the wireless power bank 200 are consistent, which means that in a case that it is recognized that the charging protocol of the charging base is consistent with the charging protocol of the wireless power bank, it may be considered that the charging base matches the wireless power bank; and in a case that it is recognized that the charging protocol of the charging base is inconsistent with the charging protocol of the wireless power bank, it may be considered that the charging base does not match the wireless power bank. In actual application, the charging base may implement charging management of the wireless power bank in a case that the charging base matches the wireless power bank. The charging base cannot implement the charging management of the wireless power bank in a case that the charging base does not match the wireless power bank.

Specifically, the first preset temperature may be specifically a critical temperature at which the wireless power bank affects the charging efficiency, and in a case that the first temperature of the wireless power bank is greater than or equal to the first preset temperature, it may be considered that the heat generation of the wireless power bank is severe and the temperature is high, affecting the charging efficiency of the wireless power bank for the electronic device and the charging efficiency of the charging base for the wireless power bank. In a case that the first temperature of the wireless power bank is less than the first preset temperature, it may be considered that the temperature of the wireless power bank is normal, and the temperature has little impact on the charging efficiency of the wireless power bank for the electronic device.

For example, the first preset temperature may be set based on an actual situation. For example, the first preset temperature may be 45 degrees Celsius, 48 degrees Celsius, 53 degrees Celsius, or the like. The first preset temperature is not specifically limited in the embodiments of the present disclosure.

In the embodiments of the present disclosure, in a case that the charging base is electrically connected to and matches the wireless power bank, and the first temperature of the wireless power bank is greater than or equal to the first preset temperature, it may be considered that the heat generation of the wireless power bank is severe and the temperature is high. In this case, the charging device may operate in the first charging mode, which means that the second controller on the wireless power bank controls the switch module to conduct the wireless charging coil and the second interface, the first power management chip on the charging base controls the wireless charging coil to wirelessly charge the electronic device, to reduce the heat generation of the wireless power bank and improve the charging efficiency of the wireless power bank when wirelessly charging the electronic device.

Optionally, the charging method further includes: performing a second charging mode in a case that the charging base does not match the wireless power bank, where in the second charging mode, the second controller controls the switch module to conduct the second power management chip and the second interface, and controls the second power management chip and the third power management chip to operate, to control the charging base through the second power management chip to charge the battery cell and control the wireless charging coil through the third power management chip to wirelessly charge the electronic device.

In the embodiments of the present disclosure, the wireless power bank may further include the second power management chip, the third power management chip, and the battery cell. The second controller is electrically connected to the second power management chip and the third power management chip separately, the second power management chip is connected to the switch module, the battery cell is electrically connected to the second power management chip and the third power management chip separately, and the third power management chip is electrically connected to the wireless charging coil.

In actual application, the battery cell may be used as a power storage module of the wireless power bank. Because the second power management chip is connected between the second controller and the battery cell, under control of the second controller, the second power management chip may be configured to perform the charging management of the wired charging on the battery cell. Because the third power management chip is connected among the second controller, the battery cell, and the wireless charging coil, the third power management chip may be configured to perform the charging management of wireless charging of the wireless charging coil on the electronic device. In actual application, whether the second power management chip performs the charging management of wired charging or the third power management chip performs the charging management of wireless charging, some heat is generated to increase the temperature of the wireless power bank.

In the embodiments of the present disclosure, the charging device is in a second charging mode in a case that the charging base does not match the wireless power bank. In the second charging mode, the second controller controls the switch module to conduct the second power management chip and the second interface, and controls the second power management chip and the third power management chip to operate, to control the charging base through the second power management chip to charge the battery cell and control the wireless charging coil through the third power management chip to wirelessly charge the electronic device.

In actual application, in a case that the charging base does not match the wireless power bank, the charging base cannot implement the charging management of the wireless power bank. In this case, the charging device may operate in the second charging mode. In other words, the second controller controls the switch module to conduct the second power management chip and the second interface, and controls the second power management chip and the third power management chip to operate, to control the charging base through the second power management chip to charge the battery cell, and control the wireless charging coil through the third power management chip to wirelessly charge the electronic device, to overcome the defect that the charging base cannot implement the charging management for the wireless power bank.

Optionally, the charging method may further include: performing the first charging mode or the second charging mode based on the first temperature and a second temperature of the electronic device in a case that the charging base matches the wireless power bank and the first temperature of the wireless power bank is less than the first preset temperature.

In actual application, in a case that the charging base matches the wireless power bank and the first temperature of the wireless power bank is less than the first preset temperature, it may be considered that the charging base may implement the charging management of the wireless power bank, the temperature of the wireless power bank is normal, and the temperature has little impact on the charging efficiency of the wireless power bank for the electronic device. In this case, the second controller may obtain the first temperature and the second temperature of the wireless power bank in real time, and switches between the first charging mode and the second charging mode based on the first temperature and the second temperature. In other words, the second controller controls the switch module to switch between conducting the wireless charging coil and the second interface and conducting the second power management chip and the second interface. In this way, switching between the wired charging and wireless charging controlled by the wireless power bank and the wireless charging controlled by the charging base may be implemented, to improve the overall charging efficiency of the charging device.

Optionally, the charging device is in the first charging mode in a case that the first temperature is greater than the second temperature and a difference between the first temperature and the second temperature is greater than a first threshold; and the charging device is in the second charging mode in a case that the second temperature is greater than the first temperature and a difference between the second temperature and the first temperature is greater than the first threshold.

In actual application, in a case that the first temperature is greater than the second temperature and the difference between the first temperature and the second temperature is greater than the first threshold, it may be considered that the heat generation of the wireless power bank is more severe than the heat generation of the electronic device. In this case, the charging device may operate in the first charging mode, which means that the charging base is used to control the wireless charging coil to wirelessly charge the electronic device. In this way, the charging efficiency is high, and the temperature of the wireless power bank may be reduced. In a case that the second temperature is greater than the first temperature and the difference between the second temperature and the first temperature is greater than the first threshold, it may be considered that the heat generation of the electronic device is more severe than the heat generation of the wireless power bank. In this case, the charging device may operate in the second charging mode, which means that the wireless power bank is used to control the charging base to perform the wired charging on the wireless power bank, and control the wireless charging coil to wirelessly charge the electronic device. In this way, the charging efficiency is high, and the temperature of the electronic device may be reduced. In the embodiments of the present disclosure, in the first charging mode and the second charging mode alternately, the wireless power bank may wirelessly charge the electronic device with high charging efficiency, and the charging base may perform wired charging on the wireless power bank with high charging efficiency.

Optionally, the charging method further includes: performing the first charging mode or a third charging mode based on the first temperature and a second temperature of the electronic device in a case that the charging base matches the wireless power bank and the first temperature is less than the first preset temperature. In the third charging mode, the second controller controls the switch module to conduct the second interface and the battery cell, and controls the third power management chip to operate, to control the wireless charging coil through the third power management chip to wirelessly charge the electronic device; and the first controller controls the fourth power management chip to operate, to control the charging base through the fourth power management chip to charge the battery cell.

In the embodiments of the present disclosure, the second controller may further obtain the battery level of the electronic device in a case that the charging base matches the wireless power bank. In a case that the battery level of the electronic device is greater than or equal to the second threshold, it may be considered that the battery level of the electronic device is sufficient. In a case that the battery level of the electronic device is less than the second threshold, it may be considered that the battery level of the electronic device is less. Specifically, the charging device may operate in the third charging mode in a case that the battery level of the electronic device is greater than or equal to the second threshold. In other words, the fourth power management chip on the charging base is used to control the charging base to perform the wired charging on the wireless power bank, and the third power management chip on the wireless power bank is used to control the wireless charging coil to wirelessly charge the electronic device. In this way, simultaneous charging of the wireless power bank and the electronic device is implemented.

In actual application, the charging device may operate in the first charging mode in a case that the charging base matches the wireless power bank and the battery level of the electronic device is less than the second threshold. In other words, the first power management chip on the charging base is used to control the wireless charging coil on the wireless power bank to wirelessly charge the electronic device, to rapidly increase the battery level of the electronic device.

In the charging method according to the embodiments of the present disclosure, switching between the plurality of charging modes may be implemented by arranging the switch module in the wireless power bank. Therefore, switching between different charging modes may be implemented based on different use scenarios, so that the charging efficiency of the charging device is high.

In conclusion, the charging method according to the embodiments of the present disclosure may specifically include the following sub-steps:

In the embodiments of the present disclosure, the charging base is provided with the first power management chip, and the wireless power bank is provided with the switch module. The charging device may be in the first charging mode in a case that the wireless power bank is connected to the charging base, that is, in a scenario in which the wireless power bank wirelessly charges the electronic device while charging itself, and in a case that the charging base is electrically connected to and matches the wireless power bank and the first temperature of the wireless power bank is greater than or equal to the first preset temperature. In other words, the second controller on the wireless power bank controls the switch module to conduct the wireless charging coil and the second interface, the first power management chip on the charging base controls the wireless charging coil to wirelessly charge the electronic device, to reduce the heat generation of the wireless power bank and improve the charging efficiency of the wireless power bank when wirelessly charging the electronic device.

FIG. 4 is a schematic diagram of modules of a charging device according to an embodiment of the present disclosure. As shown in FIG. 4, the charging device 400 may specifically include:
an obtaining module 401, configured to obtain, in a case that the second interface of the wireless power bank is electrically connected to the first interface of the charging base, a matching status between the charging base and the wireless power bank and a first temperature of the wireless power bank; and
a first execution module 402, configured to perform a first charging mode in a case that the charging base matches the wireless power bank and the first temperature of the wireless power bank is greater than or equal to a first preset temperature, where in the first charging mode, the second controller of the wireless power bank controls the switch module to conduct the wireless charging coil and the second interface, and the first controller of the charging base controls the first power management chip to operate, to control the wireless charging coil through the first power management chip to wirelessly charge the electronic device.

Optionally, the charging device 400 may further include:
a second execution module, configured to perform a second charging mode in a case that the charging base does not match the wireless power bank, where in the second charging mode, the second controller controls the switch module to conduct the second power management chip and the second interface, and controls the second power management chip and the third power management chip to operate, to control the charging base through the second power management chip to charge the battery cell and control the wireless charging coil through the third power management chip to wirelessly charge the electronic device.

Optionally, the charging device 400 may further include:
a third execution module, configured to perform the first charging mode or the second charging mode based on the first temperature and a second temperature of the electronic device in a case that the charging base matches the wireless power bank and the first temperature of the wireless power bank is less than the first preset temperature.

Optionally, the charging device 400 may further include:
a fourth execution module, configured to perform the first charging mode or a third charging mode based on the first temperature and the second temperature of the electronic device, in a case that the charging base matches the wireless power bank, and the first temperature is less than the first preset temperature, where in the third charging mode, the second controller controls the switch module to conduct the second interface and the battery cell, and controls the third power management chip to operate, to control the wireless charging coil through the third power management chip to wirelessly charge the electronic device; and the first controller controls the fourth power management chip to operate, to control the charging base through the fourth power management chip to charge the battery cell.

In conclusion, the charging device according to the embodiments of the present disclosure may include at least the following advantages:

In the embodiments of the present disclosure, the charging base is provided with the first power management chip, and the wireless power bank is provided with the switch module. The charging device may be in the first charging mode in a case that the wireless power bank is connected to the charging base, that is, in a scenario in which the wireless power bank wirelessly charges the electronic device while charging itself, and in a case that the charging base is electrically connected to and matches the wireless power bank and the first temperature of the wireless power bank is greater than or equal to the first preset temperature. In other words, the second controller on the wireless power bank controls the switch module to conduct the wireless charging coil and the second interface, and the first power management chip on the charging base controls the wireless charging coil to wirelessly charge the electronic device, to reduce the heat generation of the wireless power bank and improve the charging efficiency of the wireless power bank when wirelessly charging the electronic device.

The present disclosure further discloses a chip, where the chip includes a processor and a communication interface, the communication interface is coupled to the processor, and the processor is configured to execute a program or instructions to implement the method according to any one of the foregoing.

The present disclosure further discloses a computer program product, where the program product is executed by at least one processor to implement the method according to any one of the foregoing.

The present disclosure further discloses an electronic device, where the electronic device is configured to perform the charging method according to any one of the foregoing.

A person of ordinary skill in the art may be aware that, in combination with the examples described in embodiments disclosed in this specification, units and algorithm steps may be implemented by electronic hardware or a combination of computer software and electronic hardware. Whether the functions are executed in a mode of hardware or software depends on particular applications and design constraint conditions of the technical solutions. A person skilled in the art may use different methods to implement the described functions for each particular application. However, it should not be considered that the implementation goes beyond the scope of the present disclosure.

A person skilled in the art may clearly understand that, for a purpose of convenient and brief description, for a specific work process of the foregoing system, device, and unit, refer to a corresponding process in the foregoing method embodiments. Details are not described herein again.

In embodiments according to the present disclosure, it should be understood that the disclosed device and method may be implemented in other manners. For example, the described device embodiment is merely an example. For example, division into the units is merely logical function division, and in an actual implementation, another division manner may be used. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the devices or units may be implemented in electronic, mechanical, or other forms.

The units described as separate components may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, each functional unit in each embodiment of the present disclosure may be integrated in one processing unit, each unit may be physically present alone, or two or more units may be integrated in one unit.

Through the descriptions of the foregoing implementations, a person skilled in the art may clearly understand that the foregoing embodiment methods may be implemented by using software in combination with a necessary universal hardware platform, and certainly, may alternatively be implemented by using hardware, but the former is a better implementation in many cases. Based on such an understanding, the technical solutions of the present disclosure essentially or the part contributing to conventional technologies may be implemented in a form of a software product. The computer software product is stored in a storage medium (such as a ROM/RAM, a magnetic disk, or an optical disc) and includes several instructions for instructing a terminal (which may be a mobile phone, a computer, a server, an air conditioner, a network device, or the like) to perform the methods described in the embodiments of the present disclosure.

It may be understood that the embodiments described in the embodiments of the present disclosure may be implemented by using hardware, software, firmware, middleware, microcode, or a combination thereof. For a hardware implementation, modules, units, and subunits may be implemented in one or more application specific integrated circuits (ASIC), a digital signal processor (DSP), a digital signal processor device (DSP Device, DSPD), a programmable logic device (PLD), a field-programmable gate array (FPGA), a general purpose processor, a controller, a micro-controller, a microprocessor, and other electronic units configured to execute the functions described in the present disclosure, or a combination thereof.

For a software implementation, the technology described in the embodiments of the present disclosure may be implemented by using modules (for example, processes and functions) implementing the functions described by embodiments of the present disclosure. Software code may be stored in a memory and executed by a processor. The memory may be implemented in the processor or outside the processor.

## Claims

1. A charging device, comprising a charging base and a wireless power bank, wherein the charging base is provided with a first controller, a first power management chip, and a first interface, the first controller is electrically connected to the first power management chip and the first interface respectively, and the first interface is electrically connected to the first power management chip;
the wireless power bank is provided with a second controller, a switch module, a second interface, and a wireless charging coil, the second controller is electrically connected to the second interface and the switch module separately, the switch module is electrically connected to the second interface and the wireless charging coil separately, the second interface is adapted to the first interface, and the second interface is detachably connected to the first interface; and
the charging device is in a first charging mode in a case that the charging base is electrically connected to and matches the wireless power bank and a first temperature of the wireless power bank is greater than or equal to a first preset temperature, wherein in the first charging mode, the second controller controls the switch module to conduct the wireless charging coil and the second interface, and the first power management chip controls the wireless charging coil to wirelessly charge an electronic device.

2. The charging device according to claim 1, wherein the wireless power bank further comprises a second power management chip, a third power management chip, and a battery cell, wherein
the second controller is electrically connected to the second power management chip and the third power management chip separately, the second power management chip is connected to the switch module, the battery cell is electrically connected to the second power management chip and the third power management chip separately, and the third power management chip is electrically connected to the wireless charging coil; and
the charging device is in a second charging mode in a case that the charging base does not match the wireless power bank, wherein in the second charging mode, the second controller controls the switch module to conduct the second power management chip and the second interface, and controls the second power management chip and the third power management chip to operate, to control the charging base through the second power management chip to charge the battery cell, and control the wireless charging coil through the third power management chip to wirelessly charge the electronic device.

3. The charging device according to claim 2, wherein the second controller is configured to obtain the first temperature of the wireless power bank and a second temperature of the electronic device in a case that the charging base matches the wireless power bank and the first temperature of the wireless power bank is less than the first preset temperature, and the charging device switches between the first charging mode and the second charging mode based on the first temperature and the second temperature.

4. The charging device according to claim 3, wherein the charging device is in the first charging mode in a case that the first temperature is greater than the second temperature and a difference between the first temperature and the second temperature is greater than a first threshold; and
the charging device is in the second charging mode in a case that the second temperature is greater than the first temperature and a difference between the second temperature and the first temperature is greater than the first threshold.

5. The charging device according to claim 2, wherein the charging base is further provided with a fourth power management chip, and the fourth power management chip is electrically connected to the first controller and the first interface separately, wherein
the second controller is configured to obtain a battery level of the electronic device in a case that the charging base matches the wireless power bank, and the charging device is in a third charging mode in a case that the battery level of the electronic device is greater than or equal to a second threshold, wherein in the third charging mode, the second controller controls the switch module to conduct the second interface and the battery cell, and controls the third power management chip to operate, to control the wireless charging coil through the third power management chip to wirelessly charge the electronic device; and the first controller controls the fourth power management chip to operate, to control the charging base through the fourth power management chip to charge the battery cell.

6. The charging device according to claim 5, wherein the second controller is configured to obtain the first temperature of the wireless power bank and a second temperature of the electronic device in a case that the charging base matches the wireless power bank and the first temperature of the wireless power bank is less than the first preset temperature, and the charging device switches between the first charging mode and the third charging mode.

7. The charging device according to claim 6, wherein the charging device is in the first charging mode in a case that the first temperature is greater than the second temperature and a difference between the first temperature and the second temperature is greater than a first threshold; and the charging device is in the third charging mode in a case that the second temperature is greater than the first temperature and a difference between the second temperature and the first temperature is greater than the first threshold.

8. A charging method for the charging device according to any one of claims 1 to 7, comprising:
obtaining, in a case that the second interface of the wireless power bank is electrically connected to the first interface of the charging base, a matching status between the charging base and the wireless power bank and a first temperature of the wireless power bank; and
performing a first charging mode in a case that the charging base matches the wireless power bank and the first temperature of the wireless power bank is greater than or equal to a first preset temperature, wherein in the first charging mode, the second controller of the wireless power bank controls the switch module to conduct the wireless charging coil and the second interface, and the first controller of the charging base controls the first power management chip to operate, to control the wireless charging coil through the first power management chip to wirelessly charge the electronic device.

9. The charging method according to claim 8, wherein the charging method further comprises:
performing a second charging mode in a case that the charging base does not match the wireless power bank, wherein in the second charging mode, the second controller controls the switch module to conduct the second power management chip and the second interface, and controls the second power management chip and the third power management chip to operate, to control the charging base through the second power management chip to charge the battery cell and control the wireless charging coil through the third power management chip to wirelessly charge the electronic device.

10. The charging method according to claim 9, wherein the charging method further comprises:
performing the first charging mode or the second charging mode based on the first temperature and a second temperature of the electronic device in a case that the charging base matches the wireless power bank and the first temperature of the wireless power bank is less than the first preset temperature.

11. The charging method according to claim 9, wherein
the second controller is configured to obtain a battery level of the electronic device in a case that the charging base matches the wireless power bank, and the charging device is in a third charging mode in a case that the battery level of the electronic device is greater than or equal to a second threshold, wherein in the third charging mode, the second controller controls the switch module to conduct the second interface and the battery cell, and controls the third power management chip to operate, to control the wireless charging coil through the third power management chip to wirelessly charge the electronic device; and the first controller controls the fourth power management chip to operate, to control the charging base through the fourth power management chip to charge the battery cell.

12. The charging method according to claim 11, further comprising:
performing the first charging mode or the third charging mode based on the first temperature and a second temperature of the electronic device in a case that the charging base matches the wireless power bank and the first temperature of the wireless power bank is less than the first preset temperature.

13. The charging method according to claim 12, wherein
the charging device is in the first charging mode in a case that the first temperature is greater than the second temperature and a difference between the first temperature and the second temperature is greater than a first threshold; and the charging device is in the third charging mode in a case that the second temperature is greater than the first temperature and a difference between the second temperature and the first temperature is greater than the first threshold.

14. A chip, comprising a processor and a communication interface, wherein the communication interface is coupled to the processor, and the processor is configured to execute a program or instructions to implement the method according to any one of claims 8 to 13.

15. A computer program product, wherein the program product is executed by at least one processor to implement the method according to any one of claims 8 to 13.

16. An electronic device, wherein the electronic device is configured to perform the charging method according to any one of claims 8 to 13.
